# EUROPEAN PATENT SPECIFICATION

(11) **EP 1 541 788 B1**
(45) Date of publication and mention of the grant of the patent: **19.07.2006**
(21) Application number: 04027207.2
(22) Date of filing: 16.11.2004
(51) Int. Cl.: E05B 17/16, E05B 65/12

(54) **Locking device for vehicle**
Verriegelungsvorrichtung für Kraftfahrzeuge
Dispositif de verrouillage pour véhicules

(30) Priority: 25.11.2003 JP 2003394592
(43) Date of publication of application: 15.06.2005
(73) Proprietor: HONDA MOTOR CO., Ltd., Tokyo (JP)
(72) Inventor: Mizukura, Yuki, Wako-shi, Saitama (JP)
(74) Representative: Rupp, Christian

(56) References cited:
- US-A- 3 919 866
- PATENT ABSTRACTS OF JAPAN vol. 1998, no. 05, 30 April 1998 (1998-04-30) & JP 10 008796 A (TAKIGEN MFG CO LTD), 13 January 1998 (1998-01-13)
- PATENT ABSTRACTS OF JAPAN vol. 2002, no. 11, 6 November 2002 (2002-11-06) & JP 2002 205670 A (HONDA MOTOR CO LTD), 23 July 2002 (2002-07-23)
- PATENT ABSTRACTS OF JAPAN vol. 2003, no. 07, 3 July 2003 (2003-07-03) & JP 2003 089370 A (HONDA MOTOR CO LTD), 25 March 2003 (2003-03-25)

## Description

### [Technical Field]

The present invention relates to a locking device for a vehicle.

### [Background Art]

As a conventional locking device for a vehicle, that is, a locking device for locking steering of a handlebar, there has been known one which is combined with an ignition switch and has shutters for covering a key insertion slot (for example, see Patent Document 1, Japanese Patent No. 3431585).

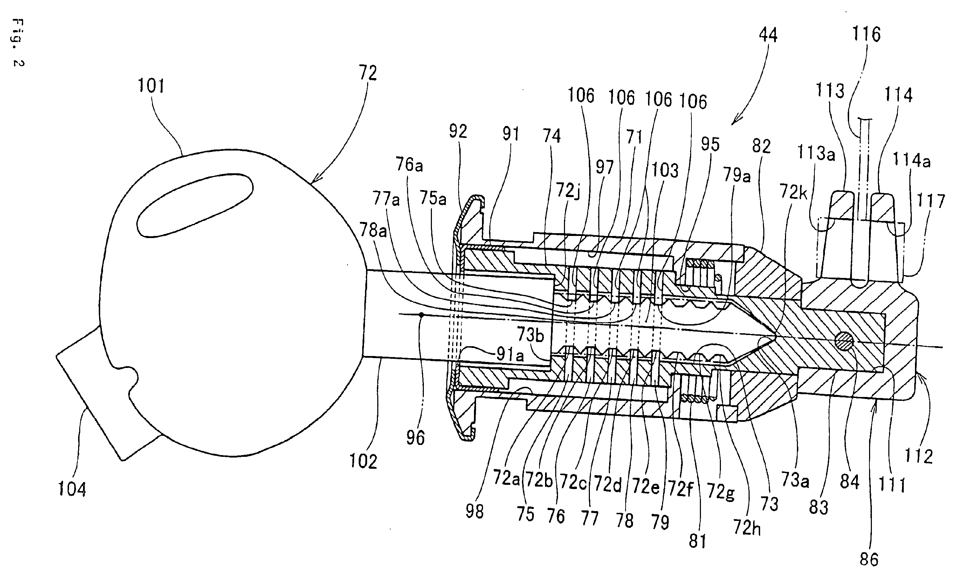

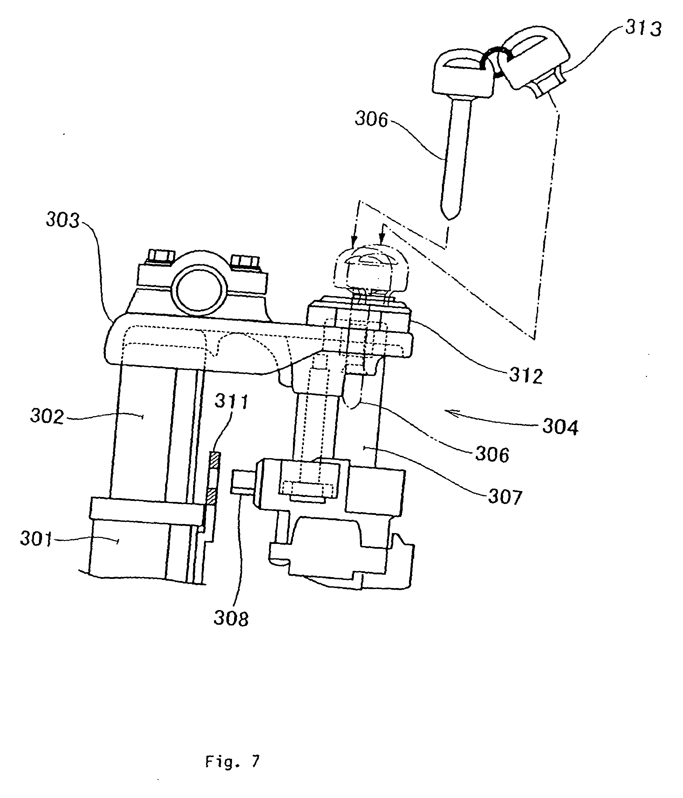

FIG. 2 of Patent Document 1 will be described with reference to the following FIG. 7. Note that the reference numerals are reallocated. FIG. 7 is a side view showing a conventional locking device for a vehicle. FIG. 7 shows a state where a steering lock 304, as the locking device for a vehicle, is attached to an upper end of a steering shaft 302, which is attached to a head pipe 301 so as to be rotatable, with a top plate 303 interposed therebetween.

The steering lock 304 is for releasing engagement (that is, a locked state) of a lock pin 308 protruding from a lock main body part 307 including a key cylinder and a lock plate 311 attached to the head pipe 301, when an ignition key 306 is inserted into the steering lock 304 and turned therein. Specifically, the steering lock 304 releases the foregoing engagement by drawing the lock pin 308 into the lock main body part 307. Moreover, from a state where a key insertion slot provided in an end of the lock main body part 307 is covered with shutters (not shown) which are provided in a cover 312, the steering lock 304 enables insertion of the ignition key 306 into the lock main body part 307 by using a magnet key 313 to open the shutters.

In the steering lock 304 provided with the shutters for closing the key insertion slot as described above, the ignition key 306 is elongated for the cover 312 housing the shutters.

Incidentally, the ignition key 306 described above often serves also as, for example, a key for a lid locking device for locking or unlocking a lid of a storage part provided in the vehicle and for a seat locking device for locking or unlocking a seat of the vehicle.

The lid locking device and the seat locking device will be described below.

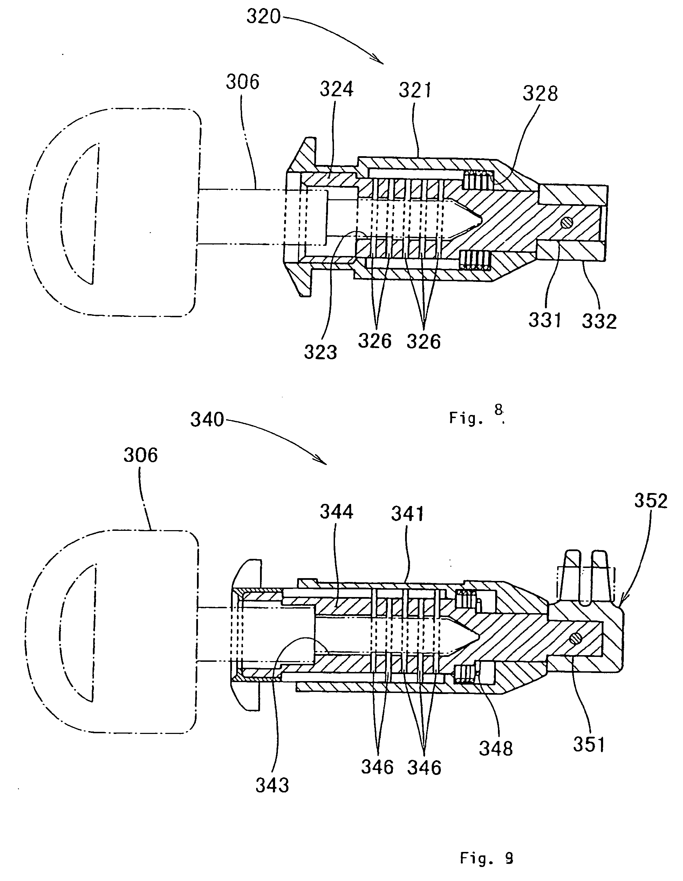

FIG. 8 is a cross-sectional view showing a conventional lid locking device. The lid locking device 320 includes: a body 321; a key cylinder 324 which is inserted into the body 321 so as to be rotatable and has a key insertion hole 323 into which the ignition key 306 (see also FIG. 7) is inserted; tumblers 326... ("..."means there exist a plurality of tumblers. The same goes for the following description.) which are provided to be movable perpendicularly to an axis of the key cylinder 324; a return spring 328 which generates elastic force in a direction opposite to a rotation direction of the ignition key 306 when the ignition key 306 is inserted into the key cylinder 324 and the key cylinder 324 is rotated by means of the tumblers 326 ...; and a cam 332 attached to an inner shaft 331 integrally formed in an end of the key cylinder 324. The body 321 is attached directly to the lid.

The cam 332 sets the lid in a locked state by allowing the lid to be engaged with a not shown engaging part and releases engagement of the cam 332 and the engaging part, that is, unlocks the lid by turning the ignition key 306 to rotate the cam 332 around the inner shaft 331.

FIG. 9 is a cross-sectional view showing a conventional seat locking device. The seat locking device 340 includes: a body 341; a key cylinder 344 which is inserted into the body 341 so as to be rotatable and has a key insertion hole 343 into which the ignition key 306 is inserted; tumblers 346... provided to be movable perpendicularly to an axis of the key cylinder 344; a return spring 348 which generates elastic force in a direction opposite to a rotation direction of the ignition key 306 when the ignition key 306 is inserted into the key cylinder 344 and the key cylinder 344 is rotated by means of the tumblers 346...; and an arm 352 attached to an inner shaft 351 integrally formed in an end of the key cylinder 344.

The arm 352 is a portion for connecting a tip of a wire extended from a locking mechanism provided on not shown seat side. By rotating the arm 352 around the inner shaft 351, the wire is drawn to unlock the locking mechanism on the seat side.

The lid locking device 320 shown in FIG. 8 has a short overall length since the number of the tumblers 326... can be reduced as compared with the steering lock 304 (see FIG. 7). Thus, only a portion close to the tip of the ignition key 306 is inserted into the tumblers 326.... Accordingly, the length of protrusion of the ignition key 306 from the key cylinder 324 is increased. Therefore, when the ignition key 306 is turned to transmit this turning force to the key cylinder 324 through the tumblers 326, large moment and large shear stress occur on the ignition key 306, and stress on the ignition key 306 is increased.

Moreover, in the seat locking device 340 shown in FIG. 9, since the key cylinder 344 is elongated to shorten the length of protrusion of the ignition key 306 from the key cylinder 344, the body 341 is accordingly elongated and the overall length of the seat locking device 340 is increased. Problems to be Solved by the Invention

It is an object of the present invention to reduce stress on a key when used both as a key for a combination locking device including an ignition switch and a handlebar locking device and a key for a seat locking device and a lid locking device, in a locking device for a vehicle, and to miniaturize the seat locking device and the lid locking device.

### [Means for Solving the Problems]

The invention according to claim 1 is characterized in that, in a vehicle having, in addition to a handlebar lock, a locking device for locking and/or unlocking accessories such as a storage box and a seat, a key insertion hole is provided up to the vicinity of an operating member provided on an end of an inner shaft of the locking device, and when a key is inserted, an engaging position of tumblers provided in the inner shaft and the key comes near a base of the key.

It is made possible to allow the engaging position of the tumblers provided in the inner shaft and the key to come near the base of the key, to insert the key all the way into the inner shaft and to dispose the tumblers in the vicinity of the key insertion hole.

The invention according to claim 2 is characterized in that the key is also used as a key for a combination locking device for a motorcycle, which is provided with shutters covering a key insertion hole to be freely opened and closed and which includes an ignition switch and locks a handlebar.

It is made possible to lock and/or unlock the combination locking device for a motorcycle and accessories such as an inner box and a seat, by use of one key.

The invention according to claim 3 is characterized in that the locking device is a seat locking device.

The key can be inserted all the way into the seat locking device.

The invention according to claim 4 is characterized in that the locking device is a lid locking device for a storage box.

The key can be inserted all the way into the lid locking device for the storage box.

In the invention according to claim 1, the key insertion hole is provided up to the vicinity of the operating member provided on the end of the inner shaft of the locking device, and when the key is inserted, the engaging position of the tumblers provided in the inner shaft and the key comes near the base of the key. Accordingly, the key can be inserted all the way into the inner shaft, thus making it possible to reduce moment and shear stress on the key and to reduce stress on the key. Moreover, the tumblers can be disposed in the vicinity of the key insertion hole and the overall length of the locking device can be shortened. Thus, miniaturization of the locking device can be achieved.

In the invention according to claim 2, the key is provided with the shutters covering the key insertion hole to be freely opened and closed, and is also used as the key for the combination locking device for a motorcycle, which includes the ignition switch and locks the handlebar. Thus, the combination locking device for a motorcycle and accessories such as the inner box and the seat can be locked and/or unlocked by use of one key. Accordingly, the number of parts can be reduced and costs can be reduced.

In the invention according to claim 3, since the locking device is the seat locking device, the key can be inserted all the way into the seat locking device. Thus, it is possible to reduce the moment and shear stress on the key and to reduce the stress on the key. Moreover, the tumblers can be disposed in the vicinity of the key insertion hole and the overall length of the seat locking device can be shortened. Thus, miniaturization of the seat locking device can be achieved.

In the invention according to claim 4, since the locking device is the lid locking device for the storage box, the key can be inserted all the way into the lid locking device for the storage box. Thus, it is possible to reduce the moment and shear stress on the key and to reduce the stress on the key. Moreover, the tumblers can be disposed in the vicinity of the key insertion hole and the overall length of an inner box locking device can be shortened. Thus, miniaturization of the inner box locking device can be achieved.

### [Embodiment of the Invention]

With reference to the drawings, an embodiment of the present invention will be described below. Note that the drawings will be viewed in the direction of the reference numerals.

### Brief Description of the Drawings

FIG. 1 is a side view of a vehicle including a locking device according to the present invention.
FIG. 2 is a first cross-sectional view showing the locking device according to the present invention.
FIG. 3 is a second cross-sectional view showing the locking device according to the present invention.
FIG. 4 is a cross-sectional view of a combination locking device using the same key as that of the locking device according to the present invention.
FIGS. 5(a) to 5 (c) are first operation diagrams showing operations of the locking device according to the present invention.
FIGS. 6(a) and 6(b) are second operation diagrams showing operations of the locking device according to the present invention.
FIG. 7 is a side view showing a conventional locking device for a vehicle.
FIG. 8 is a cross-sectional view showing a conventional lid locking device.
FIG. 9 is a cross-sectional view showing a conventional seat locking device.

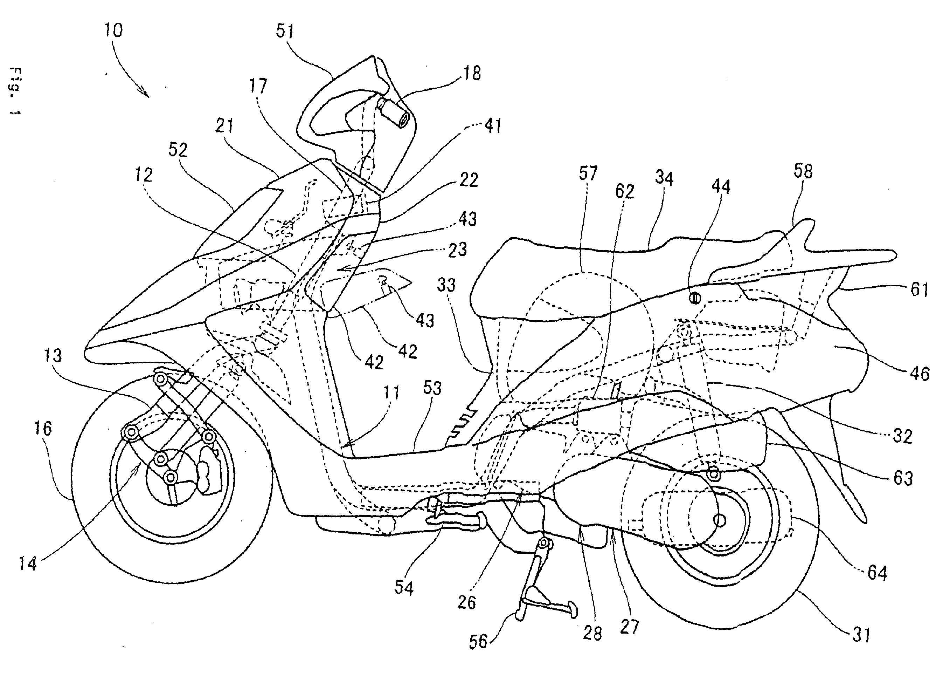

FIG. 1 is a side view of a vehicle including a locking device according to the present invention. The vehicle 10 is a scooter-type motorcycle, in which a head pipe 12 provided in a front end of a vehicle body frame 11 supports an unillustrated steering shaft to be rotatable, a front fork 13 is attached to a lower end of the steering shaft, a front wheel 16 is attached to the front fork 13 by means of a linking device 14, a handlebar post 17 is integrally provided in an upper end of the steering shaft, a handlebar 18 is attached to an upper portion of the handlebar post 17, front portions of the head pipe 12 and the handlebar post 17 are covered with a front cover 21, rear portions thereof are covered with a front inner cover 22 and a storage room 23 is provided in the front inner cover 22.

Moreover, in the vehicle 10, a rear portion of the vehicle body frame 11 supports a power unit 28 to be swingable, the unit including an engine 26 and a power transmission part 27, a rear wheel 31 is attached to a rear portion of the power unit 28, a rear cushion unit 32 is extended from a rear end of the power unit 28 and the rear portion of the vehicle body frame 11, a storage box 33 is attached in an upper rear portion of the vehicle body frame 11 and a seat 34 is attached to an upper portion of the storage box 33 so as to be openable and closable.

Reference numeral 41 in FIG. 1 is a combination locking device attached to the handlebar post 17. The combination locking device is a part combining an ignition switch and a handlebar locking device for locking steering of the handlebar 18.

Reference numeral 42 is a lid attached to the front inner cover 22 so as to be freely opened and closed for getting an object to be stored in and out of the storage room 23. Reference numeral 43 is a lid locking device attached to the lid 42 for locking the lid 42 in a closed state (that is, locking).

Reference numeral 44 is a seat locking device attached to a body cover 46, which covers sides of the vehicle body, for locking the seat 34 in a closed state.

Moreover, reference numeral 51 is a handlebar cover which covers the handlebar 18, reference numeral 52 is a head lamp, reference numeral 53 is a floor step on which a driver and a passenger put their feet, reference numeral 54 is a side stand, reference numeral 56 is a main stand, reference numeral 57 is a helmet stored in the storage box 33, reference numeral 58 is a grab rail onto which the passenger holds, reference numeral 61 is a tail lamp, reference numeral 62 is a carburetor, reference numeral 63 is an air cleaner, and reference numeral 64 is a muffler.

FIG. 2 is a first cross-sectional view showing the locking device according to the present invention. FIG. 2 shows the seat locking device 44 as the locking device.

Specifically, the seat locking device 44 includes: a cylindrical body 71; a key cylinder 74 which is housed in the body 71 so as to be rotatable and has a key insertion hole 73 therein for inserting a key 72; plate-like tumblers 75 to 79 provided in the key cylinder 74 so as to be movable perpendicularly to an axis; a return spring 81 which generates elastic force to rotate the key cylinder 74 in a rotation direction with respect to the body 71 and returns the key cylinder 74 to its original rotational position when the key 72 is inserted into the key cylinder 74 and turned; a collar 82 attached to one end of the body 71 for covering the return spring 81; and an arm 86 attached to a shaft part 83, which is integrally provided at a tip of the key cylinder 74, by use of a screw 84. Note that reference numeral 91 is an inner cover which is attached to one end of the key cylinder 74 and has a rectangular hole 91a through which the key 72 enters, and reference numeral 92 is an outer cover which covers the other end of the body 71.

The body 71 includes a cylinder housing hole 95 which houses the key cylinder 74. In the body 71, engaging grooves 97 and 98 extending along a rotation axis 96 of the key cylinder 74 are formed in the cylinder housing hole 95.

The key 72 includes: a grip part 101 which is held by a hand; a center extended part 102 which is extended from the grip part 101; and an end extended part 103 which is extended from the center extended part 102. In the key 72, a magnet key 104 is provided in the grip part 101, and groove parts 72a to 72h are formed in edges of the end extended part 103 (reference numerals 72a to 72h indicating groove parts in one of the edges on both sides are omitted) so as to be symmetrical to each other across the rotation axis 96. Note that reference numeral 72j is a step part provided between the center extended part 102 and the end extended part 103, and reference numeral 72k is a tip of the key 72.
The key insertion hole 73 is formed to have a bottom 73a with a V-shaped cross section, and has approximately the same shape as that of the V-shaped tip 72k of the key 72.

The key cylinder 74 is a member in which slots 106... are formed in a direction perpendicular to the rotation axis 96. In these slots 106..., the tumblers 75 to 79 are disposed to be movable.

The tumblers 75 to 79 have rectangular holes 75a, 76a, 77a, 78a and 79a into which the groove parts 72a to 72h of the key 72 are fitted when the key 72 is inserted into the key insertion hole 73 until the step part 72j of the key 72 hits against a step part 73b provided in the key insertion hole 73. The respective tumblers 75 to 79, which are engaged with the engaging groove 97 or the engaging groove 98 in the body 71 before the key 72 is inserted, are moved by fitting the groove parts 72a to 72h of the key 72 into the rectangular holes 75a, 76a, 77a, 78a and 79a of the tumblers 75 to 79. By releasing the engagement of the tumblers 75 to 79 and the engaging grooves 97 and 98, the key cylinder 74 can be rotated with respect to the body 71.

The return spring 81 is a torsion coil spring, which has one end attached to the body 71 and the other end attached to the key cylinder 74.

The arm 86 includes: a fitting part 112 having a shaft fitting hole 111 into which the shaft part 83 is fitted; and side protrusion parts 113 and 114 which protrude laterally from the fitting part 112 and have attachment holes 113a and 114a. A cylindrical engaging member 117 attached to a tip of a wire 116 is engaged with the attachment holes 113a and 114a.

When the key 72 is inserted into the key cylinder 74 and turned, the arm 86 is swung around the shaft part 83 to draw the wire 116 connected to an unillustrated locking mechanism on the seat side. Accordingly, a seat lock by the locking mechanism on the seat side is unlocked, thus making it possible to open the seat 34 (see FIG. 1).

The bottom 73a of the key insertion hole 73 penetrates the return spring 81 and is provided up to a position where the bottom 73a overlaps with the collar 82 provided anterior to the return spring 81 when viewed from the side and up to the vicinity of the arm 86.

Although, in this embodiment, the seat locking device 44 is intended to unlock the seat lock, the seat locking device 44 may be intended to perform the seat lock.

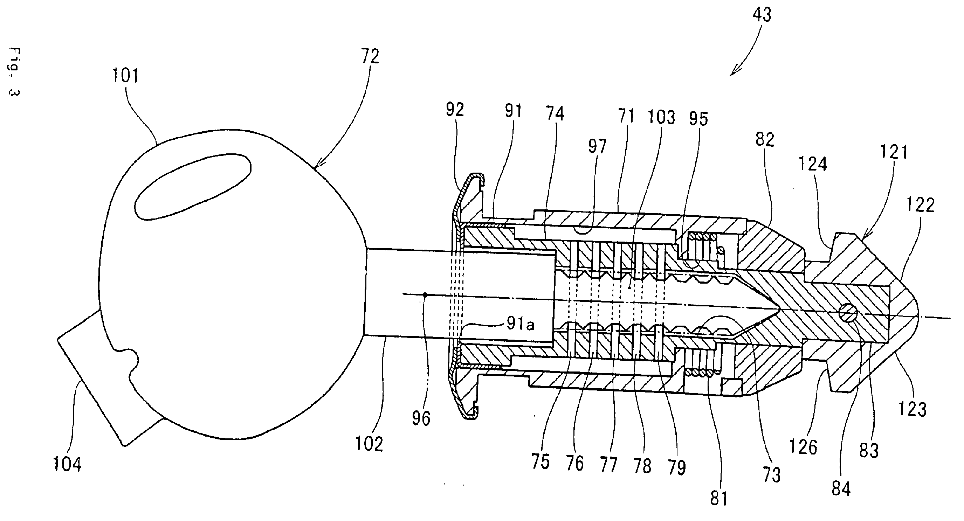

FIG. 3 is a second cross-sectional view showing the locking device according to the present invention. FIG. 3 shows the lid locking device 43 as a locking device for the storage box.

The lid locking device 43 is the locking device obtained by replacing the arm 86 (see FIG. 2) in the seat locking device 44 (see FIG. 2) with a cam 121, that is, attaching the cam 121 to the shaft part 83 by use of the screw 84.

The cam 121 includes inclined planes 122 and 123, hook parts 124 and 126 and the shaft fitting hole 111. The lid 42 (see FIG. 1) is locked in the closed state by engaging the hook parts 124 and 126 with an engaging hole provided in an inner wall portion of the storage room 23 (see FIG. 1). Meanwhile, the lid 42 can be opened by inserting the key 72 into the key cylinder 74 and turning the key 72 to release the engagement of the engaging hole and the hook parts 124 and 126. The inclined planes 122 and 123 are parts for facilitating entrance of the cam 121 into the engaging hole of which opening width is made variable by use of an elastic member and the like.

Although, in this embodiment, the lid locking device 43 is intended to unlock the lid lock, the lid locking device 43 may be intended to perform the lid lock.

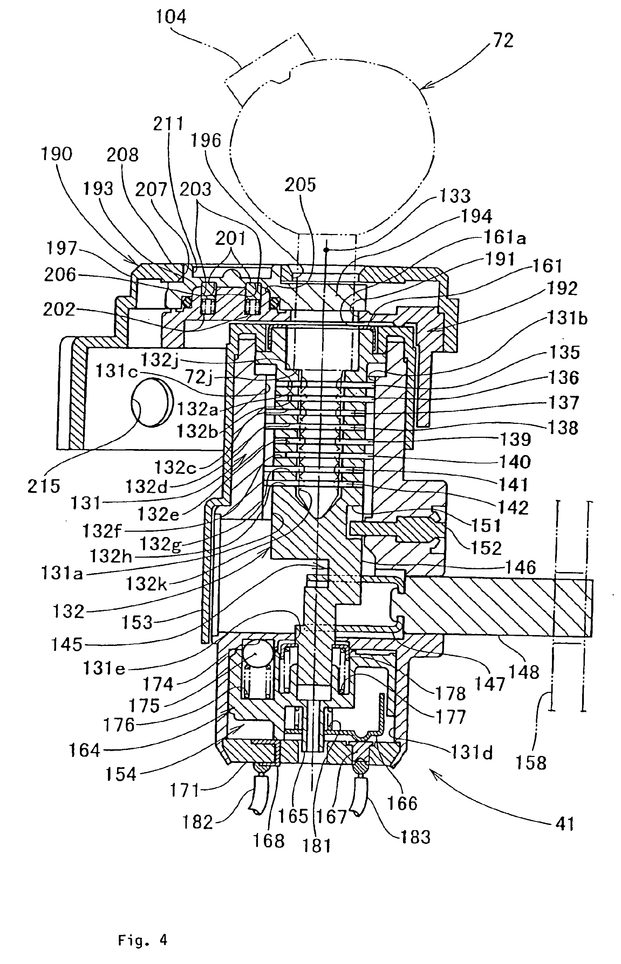

FIG. 4 is a cross-sectional view of a combination locking device for which the same key as that for the locking device according to the present invention is used. The combination locking device 41 is provided in the handlebar post 17 (see FIG. 1) and performs a handlebar lock by engaging a lock pin with the head pipe 12 (see FIG. 1) side.

The combination locking device 41 includes: a cylindrical body 131; a key cylinder 132 inserted into the body 131 so as to be rotatable; tumblers 135 to 142 provided in the key cylinder 132 so as to be movable perpendicularly to a rotation axis 133 of the key cylinder 132; a crank shaft 145 integrally provided on an end of the key cylinder 132; a U-shaped plate 147 connected to a crank pin 146 of the crank shaft 145 so as to be swingable; a lock pin 148 attached to the U-shaped plate 147; a guide pin 152 attached to the body 131 to be inserted into a guide groove 151 provided in a side of the key cylinder 132; a body cover 153 which covers one end of the body 131; and a switch part 154 provided on the other end of the body 131.

Here, reference numeral 131a is a cylinder housing hole which houses the key cylinder 132, reference numerals 131b and 131c are engaging grooves with which the tumblers 135 to 142 are engaged, reference numeral 131d is a body concave part provided in the end portion of the body 131 for housing the switch part 154, reference numeral 131e is a shaft supporting hole for supporting an end of the crank shaft 145, reference numerals 132a to 132h are slots provided in the key cylinder 132 for inserting the tumblers 135 to 142, reference numeral 132j is a step part provided in the key cylinder 132 for receiving the step part 72j of the key 72, reference numeral 132k is a key insertion hole provided in the key cylinder 132 for inserting the key 72, reference numeral 158 is a lock plate attached to the head pipe 12 (see FIG. 1) to be engaged with the lock pin 148, and reference numeral 161 is a cylinder cover attached to the other end of the key cylinder 132.

The switch part 154 includes: a cylindrical turning part 164 attached to the end of the crank shaft 145 so as to be movable in an axial direction and to be rotatable integrally with the crank shaft 145; a moving contact 166 attached to an end shaft part 165 protruded from the turning part 164 so as to be movable in the axial direction and to be rotatable integrally with the end shaft part 165; fixed contacts 167 and 168 having contact with the moving contact 166; and a contact supporting member 171 attached to an opening side of the body concave part 131d of the body 131 in order to support the fixed contacts 167 and 168.

Here, reference numerals 174... and 175... (FIG. 4 shows only one reference numeral 174 and only one reference numeral 175, respectively) are a engaging concave part for stopping the key cylinder 132, the crank shaft 145 and the moving contact 166 at predetermined positions when the key 72 is turned, and an engaging ball to be fitted into the engaging concave part. Reference numeral 176 is a spring which pushes the engaging ball 175 into the engaging concave part 174, reference numeral 177 is a spring which pushes the turning part 164 to the contact supporting member 171 side, reference numeral 178 is a spring bearing which holds one end of the spring 177, reference numeral 181 is a spring which pushes the moving contact 166 onto the fixed contacts 167 and 168, and reference numerals 182 and 183 are lead wires connected to the fixed contacts 167 and 168.

Moreover, reference numeral 190 is a shutter unit for closing a rectangular key insertion slot 161a provided in the cylinder cover 161 of the combination locking device 41.

The shutter unit 190 includes: a base part 192 having a through-hole 191 through which the key 72 enters; a shutter main body 194 attached to a convex shaft part 193 provided in the base part 192 so as to be swingable; and a cover member 197 which covers the base part 192 and the shutter main body 194, and has a through-hole 196 through which the key 72 enters.

The convex shaft part 193 of the base part 192 includes magnet housing concave parts 203 and 203 for housing a magnet 201 and a spring 202 which pushes the magnet 201 to the shutter main body 194 side, respectively.

The shutter main body 194 includes a shutter side concave part 205 into which the convex shaft part 193 of the base part 192 is fitted. In a bottom of the shutter side concave part 205, magnet engaging concave parts 206 and 206, with which the magnets 201 and 201 are engaged, are formed. In a position close to the shutter side concave part 205, a magnet key connection convex part 208 is formed, which is fitted into a through-hole 207 provided in the cover member 197 so as to be rotatable. In the magnet key connection convex part 208, a magnet key insertion hole 211 is provided, into which the magnet key 104 of the key 72 is inserted.

The cover member 197 includes an attachment hole 215 for attaching the device to the handlebar post 17 (see FIG. 1).

When the magnet key 104 including a magnet is inserted into the magnet key insertion hole 211, the magnet of the magnet key 104 and the magnets 201 and 201 of the shutter main body 194 repel each other. Accordingly, the magnets 201 and 201 are pushed into the magnet housing concave parts 203 and 203 against elastic force of the springs 202 and 202, and the magnets 201 and 201 are detached from the magnet engaging concave parts 206 and 206 in the shutter main body 194. Thus, when the magnet key 104 is turned, the shutter main body 194 swings with respect to the base part 192 and the key insertion slot 161a of the key cylinder 132 is released to the outside through the through-hole 191 of the base part 192 and the through-hole 196 of the cover member 197. Consequently, the key 72 can be inserted into the through-hole 196, the through-hole 191, the key insertion slot 161a and the key insertion hole 132k.

Next, operations of the above-described locking device will be described.

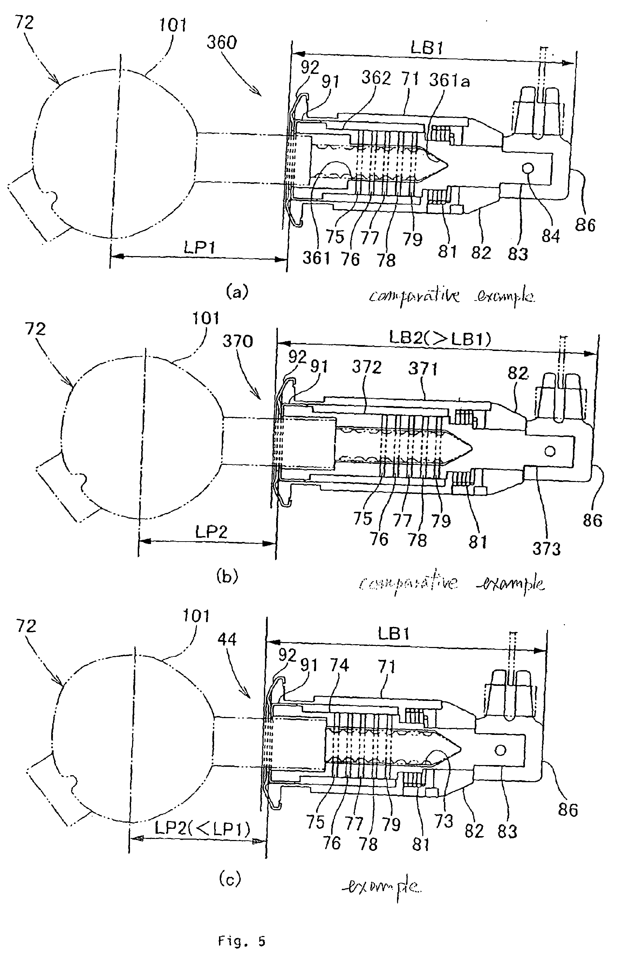

FIGS. 5(a) to 5(c) are first operation diagrams showing the operations of the locking device according to the present invention. FIG. 5(a) shows comparative example 1, FIG. 5(b) shows comparative example 2 and FIG. 5(c) shows the example (this embodiment).

In FIG. 5 (a), a locking device 360 of comparative example 1 includes: the body 71; a key cylinder 362 which is housed in the body 71 so as to be rotatable and has a key insertion hole 361 for inserting the key 72; the tumblers 75 to 79 provided in the key cylinder 362 so as to be movable perpendicularly to the axis; the return spring 81; the collar 82; and the arm 86 attached to the shaft part 83 by use of the screw 84.

A bottom 361a of the key insertion hole 361 in the key cylinder 362 is positioned close to the tumbler 79. When the key 72 is inserted into the key insertion hole 361, the tumblers 75 to 79 are turned only by a portion close to the tip of the key 72. Because of the structure described above, the key 72 protrudes significantly from the locking device 360. A length of protrusion from the inner cover 91 attached to an end of the key cylinder 362 (that is, a distance between the inner cover 91 and the grip part 101) is set to LP1. Moreover, the overall length of the locking device 360 is set to LB1.

In FIG. 5 (b), a locking device 370 of comparative example 2 includes a body 371, a key cylinder 372 provided in the body 371, the tumblers 75 to 79 provided in the key cylinder 372, the return spring 81, the arm 86 attached to a shaft part 373 integrally provided in the key cylinder 372, the inner cover 91 attached to an end of the key cylinder 372, and the outer cover 92 attached to an end of the body 371. In the locking device 370, the body 371 and the key cylinder 372 are elongated, as compared with those of the locking device 360 of comparative example 1 shown in FIG. 5(a).

In the locking device 370, since the body 371 and the key cylinder 372 are elongated, a length of protrusion LP2 of the key 72 from the locking device 370 becomes shorter than the length of protrusion LP1 (see FIG. 5(a)). However, the overall length LB2 of the locking device 370 becomes longer than the overall length LB1 (see FIG. 5(a)).

As compared with the foregoing comparative examples 1 and 2 shown in FIGS. 5(a) and 5(b), in the seat locking device 44 of the example shown in FIG. 5(c), the key insertion hole 73 is provided up to the vicinity of the arm 86 attached to the shaft part 83 of the key cylinder 74. Moreover, when the key 72 is inserted into the key insertion hole 73, the engaging position of the tumblers 75 to 79 and the key 72 comes near a base of the key 72.

Thus, the length of protrusion LP2 of the key 72 from the seat locking device 44 can be shortened and the overall length LB1 of the seat locking device 44 can be shortened.

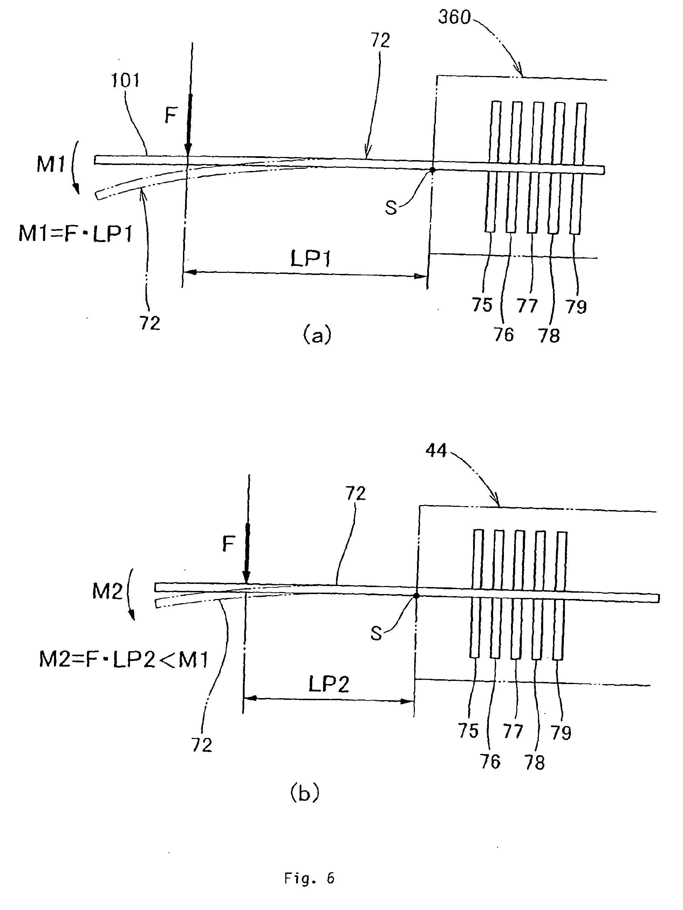

FIGS. 6 (a) and 6 (b) are second operation diagrams showing operations of the locking device according to the present invention. Both of FIGS. 6 (a) and 6 (b) show a state where the key 72 is engaged with the tumblers 75 to 79 as the device is viewed from the edge side of the key 72.

In FIG. 6 (a), if the length of protrusion LP1 of the key 72 from the locking device 360 is large, torsional stress acts on the key 72 when the key 72 is turned by gripping the grip part 101.

Here, if twisting of the key 72 by use of the torsional stress described above is equivalent to bending of a cantilever as the key 72 by use of force F, bending moment M1 at a fixed support point S (which is, specifically, equivalent to the key insertion slot 161a shown in Fig. 4) of the key 72 is M1= F·LP1.

In FIG. 6(b), when the length of protrusion LP2 of the key 72 from the seat locking device 44 is small, bending moment M2 at the fixed support point S of the key 72 is M2= F·LP2. Moreover, since LP2<LP1, M2<M1 is established.

In FIGS. 6(a) and 6(b), since the bending moment M2 of the key 72 inserted into the seat locking device 44 is smaller than the bending moment M1 of the key 72 inserted into the locking device 360, bending stress on the key 72 in the seat locking device 44 is reduced. Moreover, since shear stress on the key 72 is reduced, shear stress on the key 72 in the seat locking device 44 is also reduced.

As described above with reference to FIGS. 1 to 4, a first aspect of the present invention is that, in the vehicle 10 having, in addition to the combination locking device 41 as the handlebar lock, the lid locking device 43 and the seat locking device 44, which are for locking and/or unlocking accessories such as the storage room 23 as the storage box and the seat 34, the rectangular hole 91a as the key insertion hole is provided up to the vicinity of the cam 121 and the arm 86 as operating members provided on the end of the shaft part 83 as the inner shaft of the lid locking device 43 or the seat locking device 44, and when the key is inserted, the engaging position of the tumblers 75 to 79 provided in the shaft part 83 and the key 72 comes near the base of the key 72.

Since the key 72 can be inserted all the way into the shaft part 83, the moment and shear stress on the key 72 can be reduced and the stress on the key 72 can be reduced. Moreover, the tumblers 75 to 79 can be disposed in the vicinity of the rectangular hole 91a, and the overall lengths of the lid locking device 43 and the seat locking device 44 can be shortened. Thus, miniaturization of the lid locking device 43 and the seat locking device 44 can be achieved.

A second aspect of the present invention is that the key 72 is also used as the key 72 for the combination locking device 41 for a motorcycle, which is provided with the shutter main body 194 as the shutters covering the rectangular hole 91a to be freely opened and closed and which includes the switch part 154 as the ignition switch and locks the handlebar 18.

The key 72 is also used as the key 72 for the combination locking device 41 for a motorcycle, which is provided with the shutter main body 194 covering the rectangular hole 91a to be freely opened and closed and which includes the switch part 154 and locks the handlebar 18. Thus, the combination locking device 41 for a motorcycle and the accessories such as the storage room 23 and the seat 34 can be locked and/or unlocked by use of one key 72. Accordingly, the number of parts can be reduced and costs can be reduced

A third aspect of the present invention is that the locking device is the seat locking device 44. Since the locking device is the seat locking device 44, the key 72 can be inserted all the way into the seat locking device 44. Thus, the moment and shear stress on the key 72 can be reduced and the stress on the key 72 can be reduced. Moreover, the tumblers 75 to 79 can be disposed in the vicinity of the rectangular hole 91a, and the overall length of the seat locking device 44 can be shortened. Thus, the miniaturization of the seat locking device 44 can be achieved.

A fourth aspect of the present invention is that the locking device is a lid locking device 43. Since the locking device is the lid locking device 43, the key 72 can be inserted all the way into the lid locking device 43. Thus, the moment and shear stress on the key 72 can be reduced and the stress on the key 72 can be reduced. Moreover, the tumblers 75 to 79 can be disposed in the vicinity of the rectangular hole 91a, and the overall length of the lid locking device 43 can be shortened. Thus, the miniaturization of the lid locking device 43 can be achieved.

Note that, as the locking device of the present invention, a device for locking or unlocking a cap of a fuel tank, for example, may be adopted.

### [Industrial Applicability]

The locking device for a vehicle according to the present invention is suitable for two-wheeled and four-wheeled vehicles.

### Explanation of Reference Numerals

- 10: vehicle
- 18: handlebar
- 23: storage box (storage room)
- 34: seat
- 41: handlebar lock (combination locking device)
- 42: lid
- 43, 44: locking device (lid locking device, seat locking device)
- 72: key
- 75 to 79: tumbler
- 83: inner shaft (shaft part)
- 86, 121: operating member (arm, cam)
- 154: ignition switch (switch part)
- 161a: key insertion hole (key insertion slot)
- 194: shutters (shutter main body)

## Claims

1. A locking device for a vehicle,
**characterized in that**
in a vehicle (10) having, in addition to a handlebar lock (41), a locking device (43, 44) for locking and/or unlocking accessories such as a storage box (23) and a seat (34,
a key insertion hole (161a) is provided up to the vicinity of an operating member (86, 121) provided on an end of an inner shaft (83) of the locking device (43, 44), and
when a key (72) is inserted, an engaging position of tumblers (75-79) provided in the inner shaft (83) and the key (72) comes near a base of the key (72).

2. The locking device for a vehicle according to any of the preceding claims,
wherein the key (72) is also used as a key for a combination locking device (41) for a motorcycle (10), which is provided with shutters (194) covering a key insertion hole (161a) to be freely opened and closed and which includes an ignition switch (154) and locks a handlebar (18).

3. The locking device for a vehicle according to any of the preceding claims,
wherein the locking device is a seat locking device (44).

4. The locking device for a vehicle according to any of the preceding claims,
wherein the locking device is a lid locking device (43) for a storage box (23).

5. A vehicle having a locking device according to any of the preceding claims.

## Patentansprüche

1. Verriegelungsvorrichtung für ein Fahrzeug,
**dadurch gekennzeichnet, dass**
in einem Fahrzeug (10), das zusätzlich zu einem Lenkerschloss (41) eine Verriegelungsvorrichtung (43, 44) zum Verriegeln und/oder Entriegeln von Zubehör, wie etwa einem Aufbewahrungsbehälter (23) und einem Sitz (34) aufweist, eine Schlüssel-Einführöffnung (161a) bis zu der Umgebung eines Betätigungselements (86, 121) bereitgestellt ist, das an einem Ende eines inneren Schafts (83) der Verriegelungsvorrichtung (43, 44) bereitgestellt ist, und wobei beim Einführen eines Schlüssels (72) eine Eingreifposition von Zuhaltungen (75-79), die in dem inneren Schaft (83) bereitgestellt sind, und dem Schlüssel (72) nahe einer Basis des Schlüssels (72) liegt.

2. Verriegelungsvorrichtung für ein Fahrzeug nach einem der vorangehenden Ansprüche,
wobei der Schlüssel (72) auch als Schlüssel für eine Kombinations-Verriegelungsvorrichtung (41) für ein motorisiertes Zweirad (10) dient, welche mit Verschlüssen (194) versehen ist, die eine Schlüssel-Einführöffnung (161a) bedecken, damit diese unbehindert geöffnet und geschlossen werden kann, und welche einen Zündschalter (154) aufweist und einen Lenker (18) verriegelt.

3. Verriegelungsvorrichtung für ein Fahrzeug nach einem der vorangehenden Ansprüche,
wobei die Verriegelungsvorrichtung eine Sitz-Verriegelungsvorrichtung (44) ist.

4. Verriegelungsvorrichtung für ein Fahrzeug nach einem der vorangehenden Ansprüche,
wobei die Verriegelungsvorrichtung eine Deckel-Verriegelungsvorrichtung (43) für einen Aufbewahrungsbehälter (23) ist.

5. Fahrzeug, mit einer Verriegelungsvorrichtung nach einem der vorangehenden Ansprüche.

## Revendications

1. Dispositif de verrouillage pour un véhicule, **caractérisé en ce que** dans un véhicule (10) comportant, en plus d'un verrouillage de guidon (41), un dispositif de verrouillage (43, 44) pour verrouiller et/ou déverrouiller des accessoires tels qu'une boîte de rangement (23) et un siège (34, un orifice d'insertion de clé (161 a) est agencé au-dessus du voisinage d'un élément d'actionnement (86, 121) agencé sur une extrémité d'un arbre interne (83) du dispositif de verrouillage (43, 44), et lorsqu'une clé (72) est insérée, une position d'engagement de gorges (75, 79) prévues dans l'arbre interne (83) et la clé (72) vient à proximité d'une base de la clé (72).

2. Dispositif de verrouillage pour un véhicule selon l'une quelconque des revendications précédentes, dans lequel la clé (72) sert également de clé pour un dispositif de verrouillage à combinaison (41) pour une motocyclette (10), qui est pourvu de volets (194) recouvrant un orifice d'insertion de clé (161 a) à ouvrir et fermer librement et qui inclut un interrupteur de démarrage (154) et verrouille un guidon (18).

3. Dispositif de verrouillage pour un véhicule selon l'une quelconque des revendications précédentes, dans lequel le dispositif de verrouillage est un dispositif de verrouillage de siège (44).

4. Dispositif de verrouillage pour un véhicule selon l'une quelconque des revendications précédentes, dans lequel le dispositif de verrouillage est un dispositif de verrouillage de couvercle (43) d'une boîte de rangement (23).

5. Véhicule comportant un dispositif de verrouillage selon l'une quelconque des revendications précédentes.
